# EUROPEAN PATENT APPLICATION

(11) **EP 3 608 553 A1**
(43) Date of publication of application: **12.02.2020**
(21) Application number: 18188404.0
(22) Date of filing: 10.08.2018
(51) Int. Cl.: F16C 32/04, F16C 25/00, F16C 27/00, F16C 39/06

(54) **IMPROVED PERMANENT MAGNET BEARING**

(71) Applicant: Université catholique de Louvain, 1348 Louvain-la-Neuve (BE)
(72) Inventor: Dehez, Bruno, 5310 Liernu (BE); Van Beneden, Maxence, 1420 Braine l'Alleud (BE); Kluyskens, Virginie, 1300 Limal (BE)

(57) **Abstract**

The present invention relates to an improved permanent magnet bearing (1) for producing a substantially constant repulsion magnetic force (F), and comprising a fixed (2) and a rotatable (3) members endowed with pluralities of permanent magnets (21, 31) facing each other, a volume deformable cavity (4) containing a fluid (5) which is maintained at a substantially constant pressure by pressure means (7), for continuously exercising a pressure force to a lower surface (S) of the fixed member (2), modifying an airgap (Δz) between said fixed (2) and rotatable (3) members in response to a change of operating temperature and/or a change of said permanent magnets (21, 31) properties.

## Description

### Field of the invention

The present invention relates to an improved permanent magnet bearing.

### Background of the invention

Permanent magnet bearings allow providing a magnetic force between a rotor and a stator of mechanical rotary system thanks to the interaction between for instance two members comprising pluralities of permanent magnets facing each other with opposite polarities.

For applications subject to a high axial load, such as mechanical rotary systems comprising a flywheel or a turbine, permanent magnet bearings can be combined with mechanical bearings inside an hybrid system for guiding a shaft of the system. The guidance of the shaft is mainly ensured by the mechanical bearings while those latter are relieved from the axial load by the permanent magnet bearings thanks to generated magnetic force. This allows to increase the lifetime of the mechanical bearings, and to decrease the losses inside the system.

However, properties of permanent magnets generally depend on different parameters such as operating temperature and demagnetization due to magnets aging for instance. This change of properties result in a variation of the magnetic force taking place in permanent magnet bearings.

### Summary of the invention

An object of the invention is to provide a permanent magnet bearing that is less dependent on the changes of properties of its permanent magnets.

According to this object, the invention provides an improved permanent magnet bearing comprising:
- a fixed member;
- a rotatable member configured to rotate around an axis; the fixed and rotatable members facing each other, such that an airgap is defined between the fixed and rotatable members, and measured along the axis;
- a first plurality of permanent magnets comprised in the fixed member;
- a second plurality of permanent magnets comprised in the rotatable member; each permanent magnet of the first plurality of permanent magnets substantially facing at least partially at least one permanent magnet of the second plurality of permanent magnets with opposed polarity, in such a way to produce a repulsion magnetic force in parallel to the axis;
- a volume deformable cavity mechanically coupled with a member among the fixed and rotatable members, comprising at least one movable side bordering a surface of the member; the cavity containing a fluid for exercising a pressure force to the at least one movable side;
- pressure means connected with the cavity for maintaining said fluid at a substantially constant pressure in the cavity;
the improved permanent magnet bearing being configured such that a move of the movable side substantially in parallel to the axis occurs in response to a change of the permanent magnets properties, modifying the airgap and maintaining the force substantially constant.

This improved permanent magnet bearing is less dependent on the changes of properties of the permanent magnets. It allows to generate a substantially constant repulsion magnetic force independently from permanent magnets properties variations.

The first part of this bearing consisting in the fixed and rotatable members, and the first and second pluralities of permanent magnets is standard. For predetermined operating conditions, the cavity and the pressure means allows to reach an equilibrium position such that the repulsion magnetic force reaches a predetermined force compensating, together with another force coming from the pressure exerted by the pressurized fluid of the cavity on the surface, a predetermined system load. In the case of a variation of permanent magnets properties, for example, in the case of a change of the operating temperature, the repulsion magnetic force variates, while the pressure and the system load both remain constant. Therefore, the at least one movable side together with the member move along the axis, then modifying the airgap, till a new equilibrium position is fund, providing a repulsion magnetic force equivalent to the initial one.

The invention then allows to realize a substantially constant repulsion magnetic force even when the operating temperature varies, and/or even when the permanent magnet properties deteriorate, due to aging for instance, without any need of intervention during operation or commissioning. The repulsion magnetic force is preferably a suspension magnetic force.

The improved permanent magnet bearing according to the invention has the advantage to be very easy to manufacture because it comprises only one component, the cavity, that has to be inserted in a bearing limited space configured to be arranged between a rotor and a stator of a rotary mechanical system.

Advantageously, the cavity and the pressure means act then as compensation means allowing a passive compensation of permanent magnets properties variations, without any active intervention. This is particularly advantageous, in particular, because the impact of permanent magnets aging on the permanent magnets properties is currently not well understood. It is then important to have passive compensation means taking into account this factor. In addition, as the invention is almost not sensitive to the permanent magnet aging, it is more durable and reliable than other permanent magnetic bearings according to the prior art.

Moreover, the improved permanent magnet bearing according to the invention allows to take into account small mechanical position change perpendicularly to the axis, the repulsion magnetic force remaining substantially constant. Such position change can be due to a small shaft position deviation for instance. In addition, the largest distance between a point of the cavity and a point of the other member of the invention remains substantially constant because any airgap change is passively compensated by a size change of the cavity measure along the axis. The invention contributes then to a good mechanical stability of a mechanical system in which it is implanted.

In addition, the improved permanent magnet bearing according to the invention allows to adapt the airgap if this differs from a theoretically computed airgap. This is advantageous because it is not always possible to determine precisely beforehand all the mechanical parameters of a mechanical system in which it is planned to be implanted. It is possible to compensate an airgap deviation after an implementation of such system without having to dismantle it.

Advantageously, the invention can be used in many applications for which the repulsion magnetic force has to remain substantially constant. For instance, the improved permanent magnet bearing according to the invention can be implemented in mechanical systems, preferably high axial load mechanical rotary systems, such as turbines, flywheel systems, inertial energy storage systems, chemical pumps, nanospindles, ultra high speed permanent magnet motors, mixers and stirrers, and/or watt-hour meters.

Preferably, the member consists in the fixed member. Nevertheless, In the framework of the present document, the fixed and the rotatable members are symmetrically interchangeable. In particular, the cavity can be mechanically coupled with the rotatable member without departing from the scope of the invention. Similarly, the fixed and the rotatable members can symmetrically either be one above or below the other along the axis.

Particular embodiments of the cavity and the pressure means are discussed hereafter. Advantageously, these can be implement easily by known and accessible technical means. In particular, the pressure means are able to maintain substantially the constant pressure in the cavity either actively or passively. Preferably, the pressure means also allow to maintain temperature of the fluid in the cavity is substantially constant independently from operating temperature variations.

In the framework of the present document, the term "comprising" should not be interpreted as being restricted to the elements or steps listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising A and B" should not be limited to devices consisting only of components A and B, rather with respect to the present invention, the only enumerated components of the device are A and B, and further the claim should be interpreted as including equivalents of those components.

Furthermore, the terms "first", "second" and the like, in the present document, are used for distinguishing between similar elements and not necessarily for describing a sequential or chronological order. These terms are interchangeable under appropriate circumstances.

According to an embodiment of the invention, the first plurality of permanent magnets and/or the second plurality of permanent magnets comprises a plurality of alternated polarity concentric rings of permanent magnets arranged symmetrically and radially with respect to the axis.

The permanent magnets are preferably arched shaped. All the permanent magnets on a first ring of a first external radius have the same polarity orientation, while this first ring is fixed to a second surrounding concentric ring of a second radius greater than the first radius, all the permanent magnets on the second ring having the same other polarity orientation, and so on for other rings. Preferably, there are at least five such rings, more preferably at least ten such rings.

Preferably, both the first and second pluralities of permanent magnets comprise a plurality of alternated polarity concentric rings of permanent magnets arranged symmetrically and radially with respect to the axis. Preferably, each ring permanent magnets of the first plurality of permanent magnets with a polarity and a ring external radius faces a ring of permanent magnets of the second plurality of permanent magnets with the other polarity and the same ring external radius.

The rings of permanent magnets of the first plurality (respectively, the second plurality) of permanent magnets are preferably fixed to a surrounding annular support which is comprised in the fixed member (respectively, the rotatable member). Preferably, this support is made of iron. Preferably, the fixed member (respectively, the rotatable member) comprises a iron disk wherein annular grooves are made in order to from the surrounding annular support, and annular locations for the rings of permanent magnets. These rings are preferably fixed on the disk by an epoxy resin.

According to a first embodiment of the first part of the bearing, permanent magnets of the first plurality and/or the second plurality of permanent magnets are neodymium magnets, ie. magnets made from an alloy (Nd₂Fe₁₄B) of neodymium, iron and boron. Advantageously, neodymium magnets are well known by a man skilled in the art and are currently one of the strongest type of permanent magnets commercially available.

According to a second embodiment of the first part of the bearing, permanent magnets of the first plurality and/or the second plurality of permanent magnets are samarium-cobalt magnets, ie. magnets made from an alloy (SmCo₅ or Sm₂Co₁₇) of samarium and cobalt. Advantageously, samarium-cobalt magnets are well known by a man skilled in the art and are as strong as neodymium magnets. Moreover, they have a very high temperature rating which is very advantageous in the framework of the invention. In fact, for some applications, the temperature of the magnets can increase up to 120° Celsius and more.

Preferred embodiments of the cavity according to the invention are now discussed. In particular, the cavity is preferably implemented as at least one jack like device comprising the at least one movable side and configured for containing a pressurized fluid, preferably an air or a liquid. The force develop by the device is preferably proportional to the pressure and the surface area.

According to a first preferred embodiment of the cavity according to the invention, it comprises an interior chamber of one actuator among: a pneumatic actuator, an hydraulic actuator; the at least one movable side comprising a piston of actuator. Sides of this cavity are constituted by the actuator, comprise the piston and are preferably cylindrical shaped. The piston allows to exert the pressure on the surface.

The actuator is preferably a pneumatic actuator for the fluid being an air. The actuator is preferably an hydraulic actuator for the fluid being a liquid. Advantageously, an actuator is cheap, very well known by a man skilled in the art, and easy to manufacture and to manipulate.

According to a second preferred embodiment of the cavity of the invention, it comprises at least one cylindrical shaped volume deformable cavity bordered by:
- an upper side comprised in at least one movable side;
- a fixed lower side facing the upper side;
- a lateral side connecting the upper and fixed lower sides, extensible along the axis, and preferably deformable, comprising a soft spring, whose stiffness is lower than an axial magnetic stiffness of the permanent magnet bearing.
These sides form a fluid hermetic border of the cavity.

From a modelling point of view, the first part of the bearing can be seen as a spring without contact with the axial magnetic stiffness. In the present embodiment, the first part of the bearing and the soft spring are acting in series. By an appropriate design choice for the soft spring, the total contribution of these springs can be made independent of operating temperature variations as well as of permanent magnets aging.

In particular, this choice has to be made such that the ratio denoted by r and defined by the division of the stiffness by the axial magnetic stiffness is lower than one. More specifically, the soft spring acts to compensate at least partially the temperature effect on the repulsion magnetic force. For instance, with r = 1, the force drops at 84% before irreversible demagnetization at 158° Celsius. With r = 1/10, the axial force drops at 97% before irreversible demagnetization at 156° Celsius. As a consequence, for r > 10, the soft spring does not compensate at all the operating temperature effect. In opposition, with r < 1/10, the operating temperature variations are well compensated. Preferably, the soft spring stiffness is then at least ten times lower than the axial magnetic stiffness.

In case of an irreversible demagnetization occurred, the soft spring according to this embodiment of the cavity is still able to maintain a substantially constant repulsion magnetic force even if the temperature decrease. In that case, however, the airgap would not come back to a reference value but to a smaller value depending on the depth of such an irreversible demagnetization.

The advantageous claimed technical effect required nevertheless the combination of the soft spring and the pressurized fluid in the cavity. In fact, for some applications, the permanent magnet bearing need to bear a high axial load. In this case, a soft spring only would not be sufficient as only one compensation means for maintaining the repulsion magnetic force substantially constant. Practically, the soft spring need to have a low stiffness, to be able to develop a high axial force for compensating high axial load, as well as to have a high natural length. To implement these characteristics, it is particularly advantageous to use a soft spring as part of a flexible metal bellow introduced hereafter as a fifth embodiment of the cavity. In particular, the at least one cylindrical shaped volume deformable cavity consists preferably in an interior chamber of a pressurized metal bellow containing the fluid, the latter consisting in an air.

According to another more general preferred embodiment of the cavity of the invention, it comprises at least one interior chamber of a flexible bellow containing the fluid.

Advantageously, a flexible bellow is cheap, very well known by a man skilled in the art, and easy to manufacture and to manipulate. It allows to exert uniformly the pressure on the surface. Such a bellow is volume deformable and preferably able to dilate and to shrink following some movements of the at least one movable side, due to airgap variations, due to permanent magnets properties variations. Given that the cavity is connected to pressure means, the pressure inside the cavity maintained substantially constant despite potential volume deformation of the cavity.

Preferably the fluid is a gas, more preferably an air, the flexible bellow being one among: a pneumatic bellow, a diaphragm bellow, or a metal bellow. These particular bellows are well known by a man skilled in the art and are now referred respectively as a third, a fourth and a fifth preferred embodiments of the cavity according to the invention, this last one being substantially equivalent to a more preferred embodiment of the second above mentioned preferred embodiment of the cavity.

These embodiments of the cavity are detailed in the description of the invention. A pneumatic bellow defines preferably an airbag like cavity completely bordered by a flexible and/or elastic material able to dilate and to shrink for following the permanent magnets properties variations, in order to maintain substantially constant the repulsion magnetic force. A diaphragm bellow comprises preferably at least one rigid side and at least one flexible side. The at least one flexible side is configured for moving and/or dilating and/or contracting in response to a change of the airgap due to permanent magnets properties variations. The at least one movable side is preferably comprised in the at least one rigid side and bordered by the at least one flexible side, in such a way to move along the axis like a board attached to an elastic.

The first, second, third, fourth and fifth embodiments of the cavity are fully compatible. In fact, the cavity preferably comprises a plurality of independent chambers, each chamber constituting itself a cavity that can be implemented according to any one of those embodiments.

In particular, the cavity preferably comprises a plurality of interior chambers of flexible bellows that are arranged along a ring, around the axis. Preferably, the at least one movable side comprising a plurality of movable sides, each of these interior chambers being bordered by one of the movable sides.

Preferred embodiments of the pressure means according to the invention are now discussed. The pressure means are implemented both for a fluid consisting in a gas or in a liquid. They are preferably deported passive or active means connected to the cavity for compensating its volume variation due to airgap variations, themselves due to permanent magnets properties variations. In this sense, as explained above, the role played by those pressure means is indispensable to the realization of the invention. In fact, without such pressure means, the pressure would not be able to be maintained substantially constant in the cavity if the cavity is subject to such above mentioned volume variations. Operating temperature variations does not affect the fluid inside the cavity.

According to a first embodiment of the pressure means according to the invention, it comprises an air tank connected to the cavity; the fluid consisting in an air. According to a second embodiment of the pressure means according to the invention, it comprises an expansion tank connected to the cavity; the fluid consisting in a water.

Advantageously, both the air tank and the expansion tank are known for a skilled person and they are perfectly adapted as active pressure means for a fluid consisting in a gas and a liquid respectively. Such a tank is preferably deported from the first part of the permanent magnetic bearing and can be connected with the cavity by a relatively small pipe given that the pressure variations to be compensated in the cavity are small and occur very slowly. Although the pressure means is a major part of the invention, its implementation is advantageously very simple.

According to a third embodiment of the pressure means according to the invention, it comprises a fluidic connection to a pneumatic circuit and/or an hydraulic circuit.

This third embodiment consists in, preferably passive, pressure means able to take advantage of an existing pneumatic (if the fluid consists in a gas, such as an air) and/or hydraulic (if the fluid consists in a liquid, such as a water) circuit. Preferably, this circuit is a circuit of a high axial load mechanical rotary system in which the improved permanent magnet bearing is implanted. This embodiment of the pressure means is fully compatible with the first and/or second above mentioned embodiments. In particular, both active and passive pressure means can be used according to the invention.

According to a particular embodiment of the invention, the improved permanent magnet bearing further comprises at least one pressure sensor for monitoring the repulsion magnetic force.

Advantageously, it is very easy to provide the invention with such pressure sensor which can be very cheap and small. It allows to have a continuous picture of the repulsion magnetic force in a system. Pressure data measure from the sensor can be collected and analyzed in order to improve the mechanical implementation of the invention in a system.

Preferably, according to the second embodiment of the cavity of the invention, the improved permanent magnet bearing further comprises at least one soft spring position detector for monitoring the airgap. Data collected from the detector can be advantageously cross-checked with pressure data from the pressure sensor.

The present invention also provides an hybrid system comprising:
- an improved permanent magnet bearing according to the invention;
- a shaft arranged to rotate around the axis;
- a mechanical bearing mechanically coupled with the improved permanent magnet bearing and the shaft;
the mechanical bearing being configured for guiding the shaft along the axis; the improved permanent magnet bearing being configured for relieving the mechanical bearing from an axial load.

The present invention also provides a high axial load mechanical rotary system comprising an hybrid system according to the invention.

The whole set of embodiments of the improved permanent magnet bearing according to the invention and the whole set of advantages of this improved permanent magnet bearing use apply mutatis mutandis both to the present hybrid system and to the present high axial load mechanical rotary system.

In particular, both the present hybrid system and the present high axial load mechanical rotary system benefit from improved durability and reliability, as well as decreased internal losses.

In the context of the present document, it is appreciated that the various embodiments referred to as "preferred" are to be construed as exemplary manners in which the invention may be implemented rather than as limiting the scope of the invention.

### Brief description of the figures

For a better understanding of the present invention, reference will now be made, by way of example, to the accompanying drawings in which:
- Figure 1 illustrates a schematic view of a high axial load mechanical rotary system comprising an improved permanent magnet bearing according to an embodiment of the invention;
- Figure 2 illustrates a schematic bi-dimensional view of the improved permanent magnet bearing according to the embodiment of the invention illustrated in figure 1;
- Figure 3 illustrates a schematic tridimensional sectional view of a part of an improved permanent magnet bearing according to an embodiment of the invention;
- Figure 4 illustrates a schematic tridimensional sectional view of a lower part of an improved permanent magnet bearing according to an embodiment of the invention;
- Figure 5a1-c2 illustrate schematic bi-dimensional views of improved permanent magnet bearings according to embodiments of the invention with cavities being interior chambers of flexible bellows.

### Description of the invention

The present invention will be described with respect to particular embodiments and with reference to certain drawings but the invention is not limited thereto. The drawings described are only schematic and are nonlimiting. In the drawings, the size of some of the elements may be exaggerated and not drawn on scale for illustrative purposes. On the figures, identical or analogous elements may be referred by a same number.

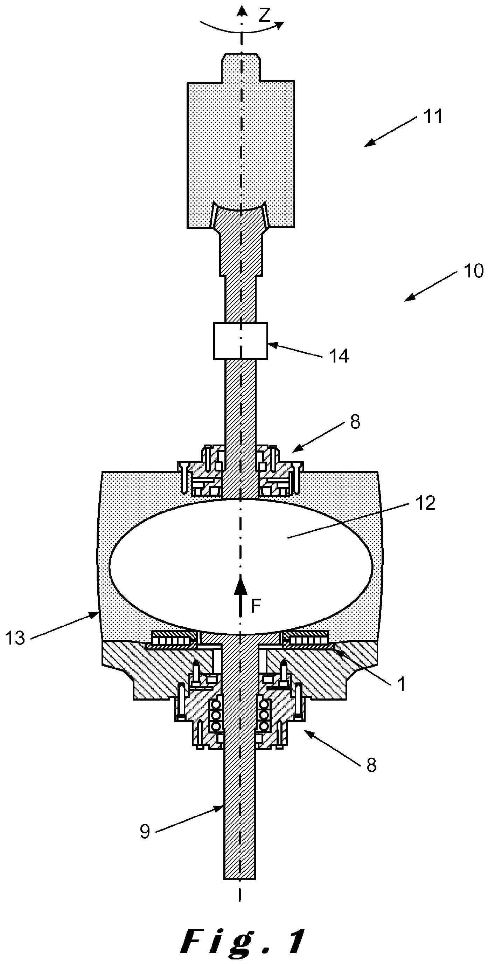

Figure 1 illustrates a high axial load mechanical rotary system 10 comprising an hydraulic turbine system 12 around a shaft 9 arranged to rotate around an axis Z. The hydraulic turbine system 12 is mechanically couples with other mechanical elements 11 by a coupling 14. The system 10 comprises an improved permanent magnet bearing 1 according to the invention, providing the hydraulic turbine system 12 with a repulsion magnetic force F. As it is schematically illustrated, the hydraulic turbine system 12 is surrounded by an enclosure 13 and comprises at least one mechanical bearing 8 which is mechanically coupled with the improved permanent magnet bearing 1 and the shaft 9. The mechanical bearing 8 includes centering devices, joints and/or a mechanical stop ensuring. The guidance of the shaft 9 is ensured by the mechanical bearing 8 while the latter is relieved from an axial load of the system 10 by the permanent magnet bearing 1 thanks to the generated repulsion magnetic force F. This allows to increase the life time of the mechanical bearing 8 as well as to decrease the losses inside the system 10. As explained in the summary of the invention, this force F is substantially constant, and this, independently from permanent magnets properties variations depending on parameters such as operating temperature and magnets aging.

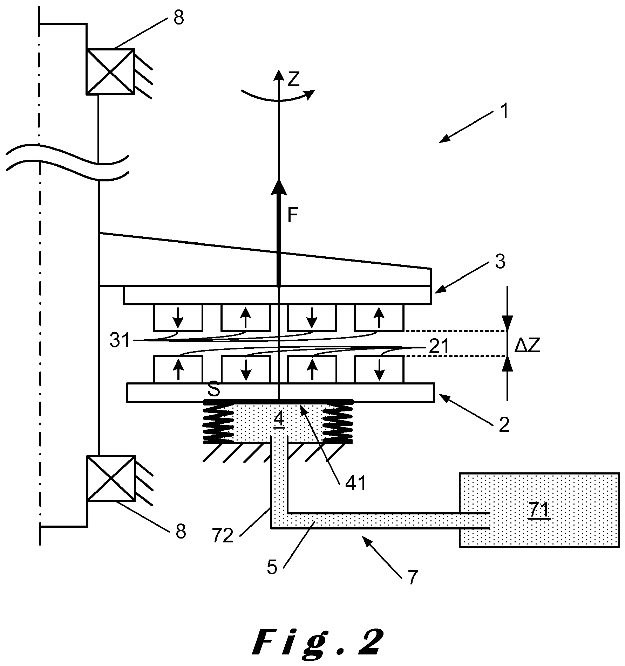

The improved permanent magnet bearing 1 is more specifically schematically illustrated in the figure 2. It comprises a fixed member 2 coupled with a stator of the flywheel system 12, a rotatable member 3 coupled with a rotor of the flywheel system 12, arranged to rotate around the axis Z, and facing the fixed member 2 along a plane perpendicular to the axis Z, such that an airgap Δz is defined between the fixed 2 and the rotatable 3 members, this airgap Δz being measured positively along the axis Z. The fixed member 2 comprises a first plurality of permanent magnets 21 and the rotatable member 3 comprises a second plurality of permanent magnets 31. Each permanent magnet of the first plurality 21 faces at least one permanent magnet of the second plurality 31 substantially in parallel to the plane, polarities of the permanent magnets being arranged in such a way to produce the repulsion magnetic force F in parallel to the axis Z. The improved permanent magnet bearing 1 also comprises a volume deformable cavity 4 mechanically coupled with the fixed member 2. This cavity 4 comprises at least one movable side 41 bordering a surface S of the fixed member 2. The cavity 4 contains a fluid 5, consisting in an air, at a predetermined substantially constant pressure for pressurizing continuously the surface S of the fixed member 2. The pressure and the temperature of the fluid 5 inside the cavity are maintained substantially constant thanks to pressure means 7 comprising a deported air tank 71 and a small pipe 72 connecting the air thank 71 and the cavity 4. In this way, as explained in the summary of the invention, as the pressure is substantially constant, a change of the permanent magnets 21, 31 properties will induce a move of the movable side 41 substantially in parallel to the axis Z, modifying then the airgap Δz, and maintaining the force F substantially constant. The volume of the air thank 71 is chosen sufficiently greater than the maximal volume variation of the cavity 4 due to the airgap Δz variation in order to maintain the pressure constant.

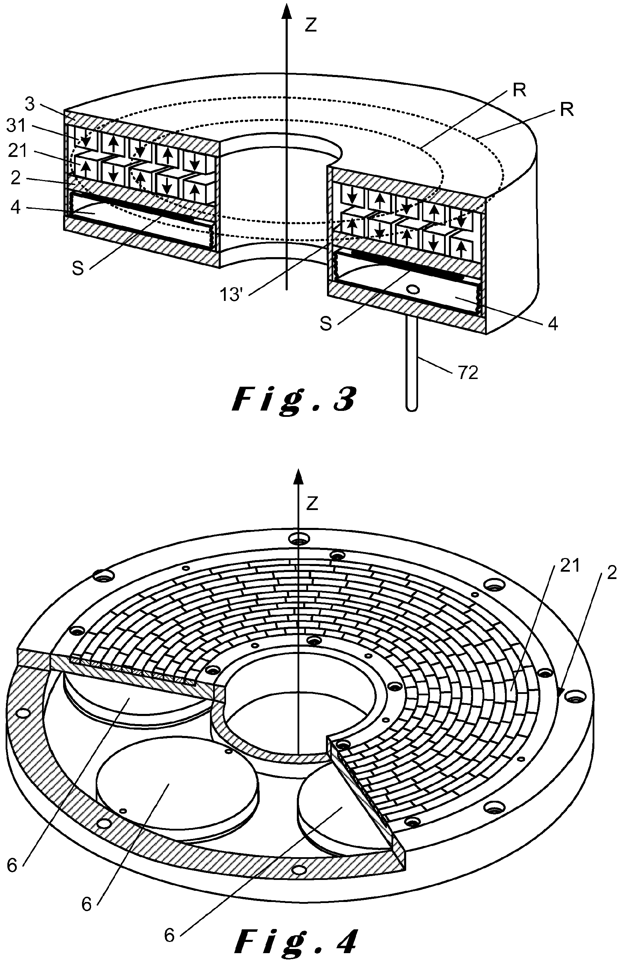

Figures 3 and 4 illustrate tridimensional sectional views of parts of an improved permanent magnet bearing 1 according to an embodiment of the invention. The permanent magnets 21 and 31 are placed on a plurality of alternated polarity concentric rings of permanent magnets R arranged symmetrically and radially with respect to the axis Z. The polarity of each ring of permanent magnets R is illustrated by an arrow. The polarities of permanent magnets 21 and 31 are substantially arranged for generating the repulsion magnetic force F. The permanent magnetic bearing 1 is enclosed in an enclosure 13'. The cavity 4 is arranged mainly below the fixed member 2 and comprises a plurality of interior chamber of flexible bellows 6 symmetrically disposed on a ring around the axis Z for exerting uniformly a substantially constant pressure on the surface S. Each of the interior chambers is connected to an air tank 71 by a small pipe 72.

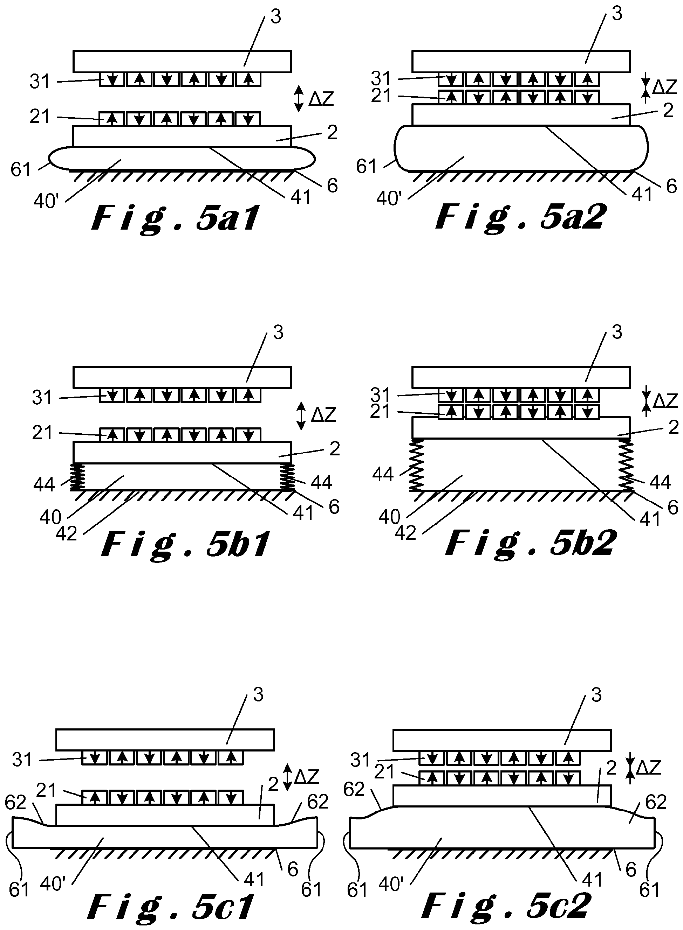

Each of the figures 5a1-2 illustrates an arrangement of a fixed member 2, a rotatable member 3 and a cavity 4 comprising an interior chamber 40' of pressurized pneumatic bellow 6 according to the embodiment of the invention called third embodiment of the cavity 4 in the summary of the invention. The interior chamber 40' is completely bordered by a movable flexible side 61 able to dilate and to shrink following the permanent magnets properties variations. As a lower part of the flexible side is arranged to be fixed to a stator of a mechanical system, a upper part of the flexible side is mainly movable along the axis Z and constitutes the pressurized at least one movable side 41 bordering a surface S of the fixed member 2.

Each of the figures 5b1-2 illustrates an arrangement of a fixed member 2, a rotatable member 3 and a cavity 4 comprising an interior chamber of pressurized metal bellow 6 according to the embodiment of the invention called fifth embodiment of the cavity 4 in the summary of the invention. In particular, this consists in a particular embodiment of the called second embodiment of the cavity 1 which comprises a cylindrical shaped volume deformable cavity 40 corresponding to the above mentioned interior chamber. This embodiment is widely discussed in the summary of the invention. The cavity bordered by the at least one movable side 41, a lower side 42 is arranged to be fixed to a stator of a mechanical system, and a flexible lateral side 43, extensible along the axis Z, and comprising a cylindrical shaped soft spring 44 surrounding the cavity 40. The spring 44 is designed to have a stiffness at least ten times lower than an axial magnetic stiffness of the magnetic bearing due to the magnetic force between the permanent magnets 21 and 31. This allows the operating temperature variations to be very well compensated.

Each of the figures 5c1-2 illustrates an arrangement of a fixed member 2, a rotatable member 3 and a cavity 4 comprising an interior chamber 40' of pressurized diaphragm bellow 6 according to the embodiment of the invention called fourth embodiment of the cavity 4 in the summary of the invention. The pressurized diaphragm bellow 6 comprises a rigid side 61 and an annular flexible side 62. The pressurized at least one movable side 41 bordering a surface S of the fixed member 2 is comprised in a connected part of the rigid side 61 and bordered annularly by the flexible side 62, in such a way to be able to move along the axis Z, according to flexible side 62 movements that permit a volume deformation of the interior chamber 40'.

Each of the figures 5a-c1 (left representations) illustrates the arrangement at an operating temperature of 20° Celsius, and each of the figures 5a-c2 (right representations) illustrates the arrangement at an operating temperature of 120° Celsius. At the latter temperature, the repulsion magnetic force F due to the permanent magnets 21 and 31 of the fixed 2 and rotatable 3 members respectively decreases due to permanent magnets properties variations themselves due to this change of operating temperature. As there is a substantially constant pressure of the fluid 5 inside the interior chamber 40 or 40', the latter's volume increases, and the airgap Δz decreases, until a equilibrium position is find allowing the repulsion magnetic force F to be maintained substantially constant.

In other words, the present invention relates to an improved permanent magnet bearing 1 for producing a substantially constant repulsion magnetic force F, and comprising a fixed 2 and a rotatable 3 members endowed with pluralities of permanent magnets 21, 31 facing each other, a volume deformable cavity 4 containing a fluid 5 which is maintained at a substantially constant pressure by pressure means 7, for continuously exercising a pressure force to a lower surface S of the fixed member 2, modifying an airgap Δz between said fixed 2 and rotatable 3 members in response to a change of operating temperature and/or a change of said permanent magnets 21, 31 properties.

Although the present invention has been described above with respect to particular embodiments, it will readily be appreciated that other embodiments are also possible. The embodiments of the invention can operate in other sequences than described or illustrated herein.

## Claims

1. Improved permanent magnet bearing (1) comprising:
- a fixed member (2);
- a rotatable member (3) configured to rotate around an axis (Z); said fixed (2) and rotatable (3) members facing each other, such that an airgap (Δz) is defined between said fixed (2) and rotatable (3) members, and measured along said axis (Z);
- a first plurality of permanent magnets (21) comprised in said fixed member (2);
- a second plurality of permanent magnets (31) comprised in said rotatable member (3); each permanent magnet of said first plurality of permanent magnets (21) substantially facing at least partially at least one permanent magnet of said second plurality of permanent magnets (31) with opposed polarity, in such a way to produce a repulsion magnetic force (F) in parallel to said axis (Z);
- a volume deformable cavity (4) mechanically coupled with a member among said fixed (2) and rotatable (3) members, comprising at least one movable side (41) bordering a surface (S) of said member; said cavity (4) containing a fluid (5) for exercising a pressure force to said at least one movable side (41);
- pressure means (7) connected with said cavity (4) for maintaining said fluid at a substantially constant pressure in said cavity (4);
the improved permanent magnet bearing (1) being configured such that a move of said movable side (41) substantially in parallel to said axis (Z) occurs in response to a change of said permanent magnets (21, 31) properties, modifying said airgap (Δz) and maintaining said force (F) substantially constant.

2. Improved permanent magnet bearing (1) according to the preceding claim, **characterized in that** said first plurality of permanent magnets (21) and/or said second plurality of permanent magnets (31) comprises a plurality of alternated polarity concentric rings of permanent magnets (R) arranged symmetrically and radially with respect to said axis (Z).

3. Improved permanent magnet bearing (1) according to any one of the preceding claims, **characterized in that** said cavity (4) comprises an interior chamber of one actuator among: a pneumatic actuator, an hydraulic actuator; said at least one movable side (41) comprising a piston of said actuator.

4. Improved permanent magnet bearing (1) according to any one of the preceding claims, **characterized in that** said cavity (4) comprises at least one cylindrical shaped volume deformable cavity (40) bordered by:
- an upper side comprised in said at least one movable side (41);
- a fixed lower side (42) facing said upper side;
- a lateral side (43) connecting said upper and fixed lower sides, extensible along said axis (Z), comprising a soft spring (44) whose stiffness is lower than an axial magnetic stiffness of said permanent magnet bearing (1).

5. Improved permanent magnet bearing (1) according to the preceding claim, **characterized in that** said soft spring stiffness is at least ten times lower than said axial magnetic stiffness.

6. Improved permanent magnet bearing (1) according to any one of the two preceding claims, **characterized in that** said at least one cylindrical shaped volume deformable cavity (40) consists in an interior chamber of a pressurized metal bellow (6) containing said fluid (5), the latter consisting in an air.

7. Improved permanent magnet bearing (1) according to any one of the claim 1 to 3, **characterized in that** said cavity (4) comprises at least one interior chamber (40') of a flexible bellow (6) containing said fluid (5).

8. Improved permanent magnet bearing (1) according to the preceding claim, **characterized in that** said fluid is an air, and said flexible bellow (6) is one among: a pneumatic bellow, a diaphragm bellow, a metal bellow.

9. Improved permanent magnet bearing (1) according to any one of the preceding claims, **characterized in that** said cavity (4) comprises a plurality of interior chambers (40') of flexible bellows (6) arranged along a ring, around said axis (Z); said at least one movable side (41) comprising a plurality of movable sides (41), each of said interior chambers (40') being bordered by one of said movable sides (41).

10. Improved permanent magnet bearing (1) according to any one of the preceding claims, **characterized in that** said fluid (5) consists in an air and said pressure means (7) comprises an air tank (71) connected to said cavity (4).

11. Improved permanent magnet bearing (1) according to any one of the claim 1 to 4, **characterized in that** said fluid (5) consists in a water and said pressure means (7) comprises an expansion tank connected to said cavity (4).

12. Improved permanent magnet bearing (1) according to any one of the preceding claims, **characterized in that** said pressure means (7) comprises a fluidic connection to a pneumatic circuit and/or an hydraulic circuit.

13. Improved permanent magnet bearing (1) according to any one of the preceding claims, further comprising at least one pressure sensor for monitoring said force (F).

14. Hybrid system comprising:
- an improved permanent magnet bearing (1) according to any one of the preceding claims;
- a shaft (9) arranged to rotate around said axis (Z);
- a mechanical bearing (8) mechanically coupled with said improved permanent magnet bearing (1) and said shaft (9);
said mechanical bearing (8) being configured for guiding said shaft (9) along said axis (Z); said improved permanent magnet bearing (1) being configured for relieving said mechanical bearing (8) from an axial load.

15. High axial load mechanical rotary system (10) comprising an hybrid system according to the preceding claim.
